# EUROPÄISCHE PATENTSCHRIFT

(11) **EP 1 188 006 B1**
(45) Veröffentlichungstag und Bekanntmachung des Hinweises auf die Patenterteilung: **11.09.2002**
(21) Anmeldenummer: 00949190.3
(22) Anmeldetag: 17.06.2000
(51) Int. Cl.: F16H 48/20

(54) **AUSGLEICHSGETRIEBE**
DIFFERENTIAL GEAR
DIFFERENTIEL

(30) Priorität: 25.06.1999 DE 19929070
(43) Veröffentlichungstag der Anmeldung: 20.03.2002
(73) Patentinhaber: ZF FRIEDRICHSHAFEN Aktiengesellschaft, 88038 Friedrichshafen (DE)
(72) Erfinder: SALG, Ditmar, D-94133 Röhrnbach (DE)
(86) Internationale Anmeldenummer: EP0005604
(87) Internationale Veröffentlichungsnummer: WO01001019

(56) Entgegenhaltungen:
- EP-A- 0 733 832
- US-A- 2 913 928
- US-A- 3 788 166
- US-A- 4 526 063
- US-A- 5 520 589

## Beschreibung

Ausgleichsgetriebe werden häufig in Fahrzeugen angewandt, um die unterschiedlichen Drehzahlen der angetriebenen Räder auszugleichen. Bei sperrbaren Ausgleichsgetrieben werden hauptsächlich zwei Arten unterschieden. Ein von einer externen Betätigungseinrichtung sperrbares Ausgleichsgetriebe, bei welchem durch Betätigen des externen Betätigungsmittels die Ausgleichswirkung des Ausgleichsgetriebes teilweise oder vollständig aufgehoben werden kann, und selbstätig sperrende Ausgleichsgetriebe. Bei selbsttätig sperrenden Ausgleichsgetrieben beruht die Sperrwirkung auf einer inneren Reibung, welche der Ausgleichsbewegung entgegenwirkt. Häufig werden für beide Arten der Ausgleichsgetriebe Lamellenkupplungen zur Aufhebung der Ausgleichsbewegung verwendet.

Die DE 195 47 980 A1 offenbart ein Ausgleichsgetriebe, welches durch die Differenzdrehzahl der Abtriebswellen ein Bremsmoment entwickelt, welches die Ausgleichswirkung des Ausgleichsgetriebes teilweise aufhebt. Hierbei besteht der Differentialkorb aus zwei Teilen, welche über Schrauben verbunden sind. Das Kegelrad, welches von einem Antriebsritzel angetrieben wird, ist über eine weitere Schraubverbindung mit dem Differentialkorb verbunden.

Die DE 38 39 787 C2 offenbart ein Ausgleichsgetriebe, bei welchem durch externes Betätigen einer Betätigungseinrichtung die Ausgleichswirkung des Ausgleichsgetriebes aufgehoben werden kann. Der Differentialkorb des Ausgleichsgetriebes besteht aus zwei Teilen, wobei ein Teil des Differentialkorbes angetrieben wird. Die Befestigung des Antriebsrades ist nicht dargestellt.

Die Erfindung geht aus von einem aus der US-A-4526063 bekannten Ausgleichsgetriebe. Das dortige Tellerrad ist zwischen Deckel und Differentialkorb eingespannt. Für die Kupplungsteile sind gesonderte Anlagen am Deckel und am Differentialkorb vorgesehen.

Aufgabe der vorliegenden Erfindung ist es, ein Ausgleichsgetriebe zu schaffen, bei welchem das Antriebsritzel und das angetriebene Kegelrad, welches mit dem Differentialkorb in Verbindung steht sowie ein Hauptbestandteil des Differentialkorbes und der darin verwendeten Ausgleichskegelräder, sowohl bei einem extern sperrbaren Ausgleichsgetriebe als auch bei einem selbsttätig sperrbaren Ausgleichsgetriebe verwendet werden können.

Die Aufgabe wird mit einem, auch die kennzeichnenden Merkmale des Hauptanspruchs 1 bzw. 2 aufweisenden, gattungsgemäßen Ausgleichsgetriebe gelöst.

Erfindungsgemäß ist das angetriebene Kegelrad, welches mit dem Differentialkorb verbunden ist, dergestalt ausgeführt, daß es zwei sich gegenüberliegende Anlageflächen besitzt, bei welchen die erste Anlagefläche als Anlage der Kupplungslamellen dient, welche zur Sperrung der Ausgleichsbewegung von extern betätigbaren Sperren für Ausgleichsgetriebe dienen. Die zweite Anlagefläche, welche der ersten Anlagefläche gegenüberliegt, dient als Anlage für eine Kupplung in einem selbstsperrenden Ausgleichsgetriebe. Der Differentialkorb besitzt einerseits eine Öffnung, durch welche die Montage der Ausgleichskegelräder erfolgt und welche zusätzlich Räume aufweist, in welche die Kupplungen bei einem selbstsperrenden Ausgleichsgetriebe eingebaut werden können und andererseits eine erste Lagerstelle zur Lagerung des Differentialkorbes im Achsgehäuse. Die abtriebsseitigen Ausgleichskegelräder, welche sich im Differentialkorb befinden, weisen Befestigungspunkte zur Befestigung der Innenlamellen der Kupplungen zur Sperrung des Ausgleichsgetriebes auf. Das angetriebene Kegelrad ist drehfest mit dem Differentialkorb verbunden und verschließt die Öffnung des Differentialkorbes teilweise, wobei die zweite Anlagefläche, welche als Anlage für die Kupplung des selbstsperrenden Ausgleichsgetriebes dient, in die Öffnung des Differentialkorbes hineinragt. Das angetriebene Kegelrad, welches drehfest mit dem Differentialkorb verbunden ist, ist zwischen dem Differentialkorb und einem Deckel angeordnet, welcher über Befestigungselemente mit dem angetriebenen Kegelrad und dem Differentialkorb verbunden ist und eine zweite Lagerstelle zur Lagerung des Ausgleichsgetriebes im Achsgehäuse aufweist. Indem das angetriebene Kegelrad zwischen dem Deckel und dem Differentialkorb angeordnet ist, ist es möglich, die Kupplungen je nach Anwendungsfall an den Anlageflächen des Kegelrades anliegen zu lassen. Je nach Einsatzfall, ob als selbstsperrendes Ausgleichsgetriebe oder durch eine externe Betätigungseinrichtung sperrbares Ausgleichsgetriebe, werden unterschiedliche Deckel verwendet. Durch diese Anordnung ist es möglich, bei einem selbstsperrenden Ausgleichsgetriebe und bei einem extern sperrbaren Ausgleichsgetriebe den Hauptbestandteil des Differentialkorbes, die Ausgleichskegelräder im Differentialkorb und das angetriebene Kegelrad gleich auszuführen. Wird ein getrenntes Achsgehäuse verwendet, welches einerseits das Ausgleichsgetriebe überragt, so kann zusätzlich dieser Teil, der das Ausgleichsgetriebe überragt, bei beiden Arten von Ausgleichsgetrieben gleich gestaltet sein. Dadurch ist es möglich, einen Baukasten zu schaffen, bei welchem beide Arten von Ausgleichsgetrieben mit vielen gleichen Bauteilen hergestellt werden können.

Weitere Ausgestaltungsmerkmale sind der Figurenbeschreibung zu entnehmen.
Es zeigen:

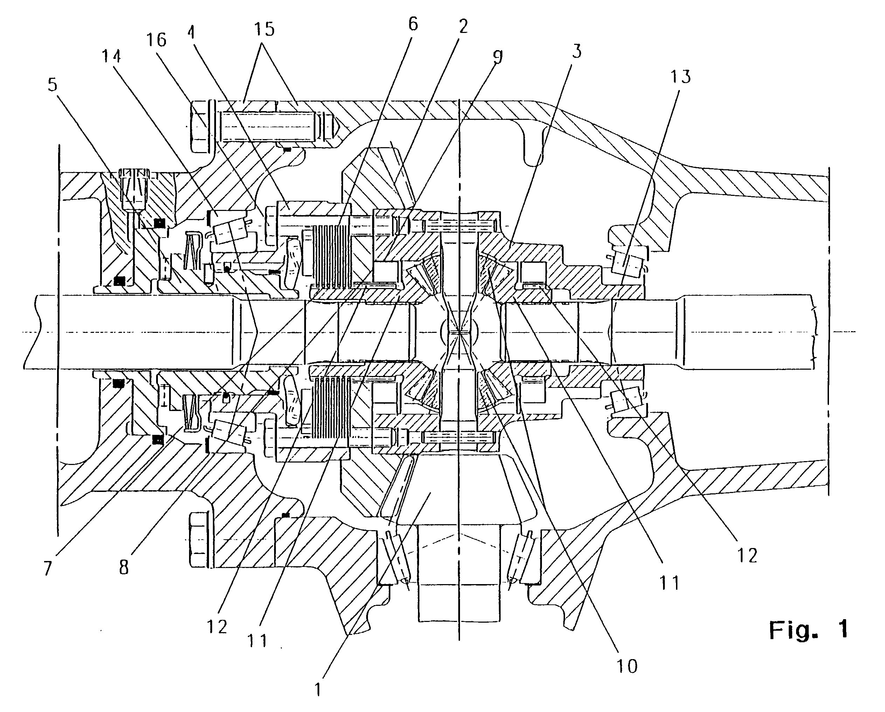

- Fig. 1: ein sperrbares Ausgleichsgetriebe, welches durch externe Betätigung einer Betätigungseinrichtung sperrbar ist und

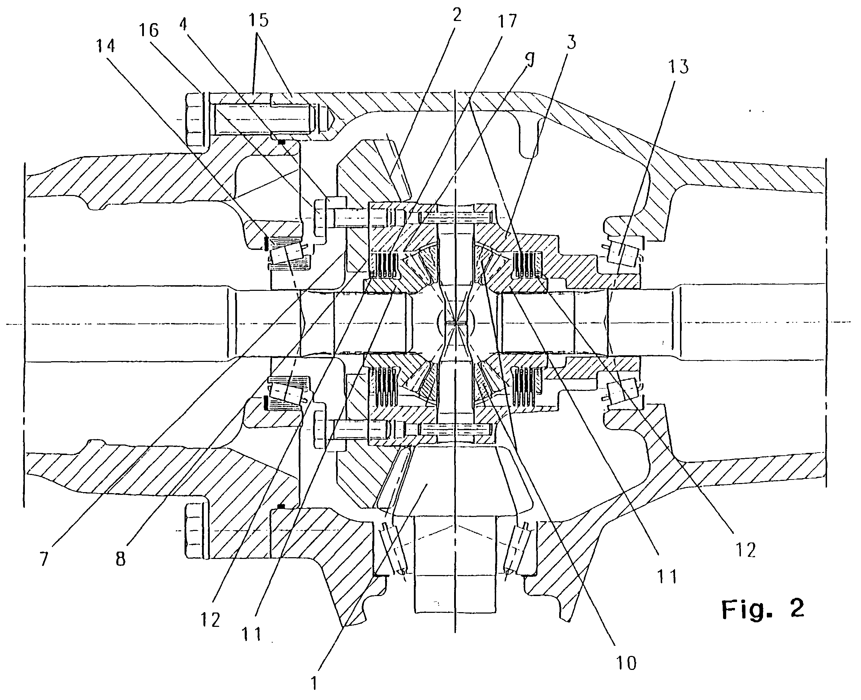

- Fig. 2: ein sperrbares Ausgleichsgetriebe, welches durch die Differenzdrehzahl der angetriebenen Räder selbsttätig die Ausgleichswirkung reduziert.

### Fig. 1:

Ein Antriebsritzel 1 treibt ein Tellerrad 2 an, welches mit dem Differentialkorb 3 drehfest verbunden ist. Das Tellerrad 2 ist zwischen einem Differentialkorb 3 und einem Deckel 4 angeordnet. Über eine extern mit Druck beaufschlagbare Betätigungseinrichtung 5 wird bei Druckbeaufschlagung der Betätigungseinrichtung 5 eine axiale Kraft auf die Kupplung 6 ausgeübt, welche sich auf einer ersten Anlagefläche 7 des Tellerrades 2 abstützt. Das Tellerrad 2 besitzt eine zweite Anlagefläche 8, mit welcher das Tellerrad 2 an dem Differentialkorb 3 anliegt. Der Differentialkorb 3 besitzt einerseits eine Öffnung 9, durch welche die Ausgleichskegelräder 10 eingebaut werden können. Die abtriebsseitigen Ausgleichskegelräder 11 besitzen ein Profil 12, welches zur Aufnahme von Lamellen der Kupplung 6 dient. Der Differentialkorb 3 wird einerseits durch eine Lagerung 13 und andererseits durch eine Lagerung 14 im Achsgehäuse 15 gelagert. Der Deckel 4, das Tellerrad 2 und der Differentialkorb 3 sind über Befestigungsmittel 16 miteinander drehfest verbunden.

### Fig. 2:

Ein Antriebsritzel 1 treibt ein Tellerrad 2, welches mit einem Differentialkorb 3 verbunden ist, an. Das Tellerrad 2 weist zwei Anlageflächen auf, eine erste Anlagefläche 7 und eine zweite Anlagefläche 8, wobei die zweite Anlagefläche 8 als Anlage für die Kupplung 17 und als Anlage für das Tellerrad 2 am Differentialkorb 3 dient. Die Ausgleichskegelräder 11, welche mit den Ausgleichskegelrädern 10 durch eine Öffnung 9 im Differentialkorb 3 montierbar sind, besitzen ein Profil 12, auf welchem die Kupplungen 17 angeordnet sind. Der Differentialkorb 3 weist einerseits eine Lagerstelle 13 auf, und ist andererseits über Befestigungsmittel 16 mit einem Deckel 4 und dem Tellerrad 2 drehfest verbunden, wobei der Deckel 4 eine Lagerung 14 aufweist. Über die Lagerung 13 und 14 ist das Ausgleichsgetriebe im Achsgehäuse 15 gelagert. Indem das Tellerrad 2 in seiner radialen Erstreckung geringer ist als die radiale Erstreckung der Öffnung 9 des Differentialkorbes 3, ist es möglich, das Tellerrad 2 als Anlage für die Kupplung 17 zu verwenden. Durch die Differenz der Ausgleichskegelräder 11 wird eine Reibung in den Kupplungen 17 erzeugt, welche die Ausgleichswirkung des Ausgleichsgetriebes minimieren.

### Bezugszeichen

- 1: Antriebsritzel
- 2: Tellerrad
- 3: Differentialkorb
- 4: Deckel
- 5: Betätigungseinrichtung
- 6: Kupplung
- 7: erste Anlagefläche
- 8: zweite Anlagefläche
- 9: Öffnung
- 10: Ausgleichskegelrad
- 11: Ausgleichskegelrad
- 12: Profil
- 13: Lagerung
- 14: Lagerung
- 15: Achsgehäuse
- 16: Befestigungsmittel
- 17: Kupplung

## Patentansprüche

1. Ausgleichsgetriebe,
- mit einem die Elemente des Ausgleichsgetriebes und zumindest eine Kupplung (6 oder 17) aufnehmenden und drehbaren Differentialgehäuse, das aus einem Differentialkorb (3) und einem Deckel (4) sowie einem daran befestigten Tellerrad (2) besteht,
- mit einem Antriebsritzel (1), welches das Tellerrad (2) antreibt,
- wobei die mindestens eine Kupplung (6, 17) eine teilweise oder vollständige Sperrung der Ausgleichswirkung des Ausgleichsgetriebes bewirkt,
- wobei sich das Tellerrad (2) zwischen dem Deckel (4) und dem Differentialkorb (3) befindet und mit diesen fest verbunden ist, und
- wobei das Tellerrad (2) eine erste und eine zweite Anlageseite (7, 8) aufweist,
**dadurch gekennzeichnet, daß**
- die erste Anlageseite (7) des Tellerrades als Anlage für den Deckel (4) und gleichzeitig als Anlage für Kupplungsteile der Kupplung (6), die zur Sperrung der Ausgleichswirkung des Ausgleichsgetriebes mittels einer Sperreinrichtung betätigbar ist, dient und
- die zweite Anlageseite (8) des Tellerrades der Anlage an dem Differentialkorb (9) dient.

2. Ausgleichsgetriebe
- mit einem die Elemente des Ausgleichsgetriebes und zumindest eine Kupplung (6 oder 17) aufnehmenden und drehbaren Differentialgehäuse, das aus einem Differentialkorb (3) und einem Deckel (4) sowie einem daran befestigten Tellerrad (2) besteht,
- mit einem Antriebsritzel (1), welches das Tellerrad (2) antreibt,
- wobei die mindestens eine Kupplung (6, 17) eine teilweise oder vollständige Sperrung der Ausgleichswirkung des Ausgleichsgetriebes bewirkt,
- wobei sich das Tellerrad (2) zwischen dem Deckel und dem Differentialkorb befindet und mit diesen fest verbunden ist, und
- wobei das Tellerrad (2) eine erste und eine zweite Anlageseite (7, 8) aufweist,
**dadurch gekennzeichnet, daß**
- die zweite Anlageseite (8) des Tellerrades (2) als Anlage für den Differentialkorb (3) und gleichzeitig als Anlage für Kupplungsteile der Kupplung (17), die eine selbstsperrende Ausgleichswirkung des Ausgleichsgetriebes erzeugt, dient und
- die erste Anlageseite (7) des Tellerrades (2) als Anlage für den Deckel (4) dient.

3. Ausgleichsgetriebe nach Anspruch 1 und 2, **dadurch gekennzeichnet, daß** der Differentialkorb (3) auf einer ersten Seite eine Öffnung (9) aufweist, durch welche Ausgleichskegelräder (10, 11) einbaubar sind und auf einer zweiten Seite eine Lagerung (13) aufweist.

4. Ausgleichsgetriebe nach Anspruch 3, **dadurch gekennzeichnet, daß** die Öffnung (9) des Differentialkorbes (3), durch welche die Ausgleichskegelräder (10, 11) einbaubar sind, dem Tellerrad (2) benachbart angeordnet ist.

5. Ausgleichsgetriebe nach Anspruch 1 und 2, **dadurch gekennzeichnet, daß** die innere radiale Erstreckung der Anlageseiten (7, 8) des Tellerrades (2) geringer ist als die radiale Erstreckung der Öffnung (9) des Differentialkorbes (3) auf seiner ersten Seite.

6. Ausgleichsgetriebe nach Anspruch 1 und 2, **dadurch gekennzeichnet, daß** der Deckel (4) mit einer ersten Lagerung (14) und der Differentialkorb (3) mit einer zweiten Lagerung (13) in einem Achsgehäuse (15) gelagert sind.

## Claims

1. The invention relates to a differential gear
- with a rotatable differential housing accommodating the elements of the differential gear and at least one clutch (6 or 17), with the housing consisting of a differential cage (3) and a cover (4) and a ring gear (2) mounted on it;
- with a drive pinion (1) driving the ring gear (2);
- with at least one clutch (6, 17) effecting partial or complete locking of the differential effect of the differential gear;
- with the ring gear (2) being arranged between the cover (4) and the differential cage (3) and firmly fixed to the latter;
- with the ring gear (2) featuring a first and a second contact surface (7,8);
**characterized in that**
- the first contact surface (7) of the ring gear serves as a contact surface for the cover (4) and at the same time as contact surface for clutch parts of the clutch (6), which by means of a locking device can be activated to lock the differential effect of the differential gear and
- the second contact surface (8) of the ring gear serves as a contact surface for the differential cage (9).

2. A differential gear
- with a rotatable differential housing accommodating the elements of the differential gear and at least one clutch (6 or 17), with the housing consisting of a differential cage (3) and a cover (4) and a ring gear (2) mounted on it;
- with a drive pinion (1) driving the ring gear (2);
- with at least one clutch (6, 17) effecting partial or complete locking of the differential effect of the differential gear;
- with the ring gear (2) being arranged between the cover (4) and the differential cage (3) and firmly fixed to the latter;
- with the ring gear (2) featuring a first and a second contact surface (7,8);
**characterized in that**
- the second contact surface (8) of the ring gear (2) serves as a contact surface for the differential cage (3) and at the same time as contact surface for clutch parts of the clutch (17), which produces a self-locking differential effect of the differential gear, and
- the first contact surface (7) of the ring gear (2) serves as contact surface for the cover (4).

3. A differential gear according to claims 1 and 2, **characterized**
**in that** the differential cage (3) on a first side features an opening (9), through which differential bevel gears (10, 11) can be installed, and on a second side features a bearing (13).

4. A differential gear according to claim 3, **characterized**
**in that** the opening (9) of the differential cage (3), through which the differential bevel gears (10, 11) can be installed, is arranged adjacent to the ring gear (2).

5. A differential gear according to claims 1 and 2, **characterized**
**in that** the inner radial extension of the contact surfaces (7, 8) of the ring gear (2) is less than the radial extension of the opening (9) of the differential cage (3) on its first side.

6. A differential gear according to claims 1 and 2, **characterized**
**in that** the cover (4) with a first bearing (14) and the differential cage (3) with a second bearing (13) are supported in an axle casing (15).

## Revendications

1. Différentiel doté d'un carter de différentiel orientable et intégrant les éléments du différentiel et au moins un embrayage (6 ou 17), le carter de différentiel orientable étant constitué d'une cage de différentiel (3) et d'un couvercle (4) ainsi que d'une couronne (2) y rapportée ;
et doté d'un pignon d'entrée (1), entraînant la couronne (2) ;
sachant que l'embrayage (6, 17) provoque un blocage partiel ou total du différentiel ;
sachant que la couronne (2) se trouvant entre le couvercle (4) et la cage du différentiel (3) est solidaire de la cage du différentiel et
sachant que la couronne (2) comporte une première et une deuxième face d'appui (7, 8), **caractérisé en ce que**
la première face d'appui (7) de la couronne sert d'appui pour le couvercle (4) et en même temps d'appui pour les éléments de couplage de l'embrayage (6) qui peut être actionné pour bloquer le différentiel au moyen d'un dispositif de verrouillage et **en ce que** la deuxième face d'appui (8) de la couronne sert de face d'appui sur la cage du différentiel (9).

2. Différentiel doté d'un carter de différentiel orientable et intégrant les éléments du différentiel et au moins un embrayage (6 ou 17), le carter de différentiel orientable étant constitué d'une cage de différentiel (3) et d'un couvercle (4) ainsi que d'une couronne (2) y rapportée ;
et doté d'un pignon d'entrée (1), entraînant la couronne (2) ;
sachant que l'embrayage (6, 17) provoque un blocage partiel ou total du différentiel ;
sachant que la couronne (2) se trouvant entre le couvercle (4) et la cage du différentiel (3) est solidaire de la cage du différentiel et
sachant que la couronne (2) comporte une première et une deuxième face d'appui(7, 8), **caractérisé en ce que**
la deuxième face d'appui (8) de la couronne (2) sert d'appui pour la cage de différentiel (3) et en même temps d'appui pour les éléments de couplage de l'embrayage (17) créant un effet autobloquant du différentiel, et **en ce que** la première face d'appui (7) de la couronne (2) sert de face d'appui pour le couvercle (4).

3. Différentiel selon les revendications 1 et 2, **caractérisé en ce que** la cage de différentiel (3) comporte sur une première face une ouverture (9) à travers laquelle peuvent être montés des pignons de différentiel (10, 11) et **en ce qu'**elle comporte sur une deuxième face un support (13).

4. Différentiel selon la revendication 3, **caractérisé en ce que** l'ouverture (9) de la cage de différentiel (3) à travers laquelle peuvent être montés les pignons de différentiel (10, 11) est juxtaposée à la couronne (2).

5. Différentiel selon les revendications 1 et 2, **caractérisé en ce que** l'étendue radiale et intérieure des faces d'appui (7, 8) de la couronne (2) est moins importante que l'étendue radiale de l'ouverture (9) de la cage de différentiel (3) sur sa première face.

6. Différentiel selon les revendications 1 et 2, **caractérisé en ce que** le couvercle (4) est logé avec un premier support (14) et la cage de différentiel (3) est logée avec un deuxième support (13) dans un carter de pont (15).
